# EUROPEAN PATENT APPLICATION

(11) **EP 2 377 486 A1**
(43) Date of publication of application: **19.10.2011**
(21) Application number: 11161866.6
(22) Date of filing: 11.04.2011
(51) Int. Cl.: A61C 1/08

(54) **Template for drilling holes for dental implants**

(30) Priority: 14.04.2010 IT PD20100119
(71) Applicant: Crudo, Vincenzo, 36075 Montecchio Maggiore (VI) (IT)
(72) Inventor: Crudo, Vincenzo, 36075 Montecchio Maggiore (VI) (IT)
(74) Representative: Modiano, Micaela Nadia

(57) **Abstract**

An apparatus (10) for providing implantation sites for dental surgery, comprising:
- a reference template (11), which incorporates one or more first cylindrical surgical stents (12, 12a, 12x, 12z) having a first diameter,
- a series of additional surgical stents (13, 14, 15, 16), each having a different diameter which decreases with respect to one of the first stents, the additional stents being contoured so that they are insertable reversibly in order one inside the other,
- a series of pilot burrs (17), each of which has a diameter that is compatible with a corresponding one of the surgical stents (12, 13, 14, 15, 16),
- a series of expanders-compactors (18, 19) and of osteotomes, each of which has a diameter that is compatible with a corresponding one of the surgical stents (12, 13, 14, 15, 16),
- a predefined intra-bone implant (20).

## Description

The present invention relates to an apparatus for providing implantation sites to be provided in dental surgery, and a method to be performed with such apparatus.

Dental implantology is the technique of fixing an implant for supporting a further structural element such as, typically, the stump of an artificial tooth, to the bone structure of the jaw.

In implantology the method with which implantation sites are executed is extremely important, as the site must be exact in order to ensure the best possible stability for the implant associated with the implantation site and in order to prevent damage to the surrounding anatomical structures.

This necessity ensures that, in the field of implantology, prosthetically guided implant placement is gaining increasing acceptance. Basically, prosthetically guided implant placement consists in the creation of a reference template, on which surgical stents are prepared, that are adapted to guide the surgical burr during the preparation of implantation sites.

A surgical stent is a guide, typically a bush (i.e. a tubular element) made of titanium, steel or another suitable material of appropriate and known size, which serves to guide the surgical burr during the drilling of the bone of the patient in the step of preparing the implantation site.

The reference template is a prosthesis that serves to encapsulate the surgical stents once the correct inclination and three-dimensional position have been identified.

The template is built on a model obtained from an impression of the patient.

The reference template, once completed with one or more surgical stents, is then placed on the complementary anatomical structure (the patient's dental arch) on which the implantation sites are executed.

A site is generally made by using, one after the other, a series of burrs of increasing diameter until a site is made of depth and diameter that are sufficient to receive a threaded element called an 'implant holder'.

Such a template with stents is generally made starting with a dental cast of the patient, making a virtual modelling of that cast and a computerised calculation of the best possible surgical solution, and the best solution is then made possible by fabricating the template carrying the stents positioned as per the virtual model at the best possible point and with optimal inclination for the procedure to be executed.

The use of the traditional surgical procedure, based on drilling in series, although widespread and appreciated, involves a considerable loss of bone material, and not infrequently, as in the case of spongy (and hence not dense) bone, the excessive removal of bone material can result in poor primary stability.

At the same time, nowadays procedures for the execution of osteotomic sites, based on the adoption of devices known as expanders-compactors, are known and increasingly widespread.

An expander-compactor consists in a threaded stem that is conical for an end section and cylindrical in a central section, and is provided with a head contoured for gripping, either manually or by means of manual screw-turning tools of the type of a ratchet wrench.

Expanders-compactors make it possible to manually create a site by means of a progressive expansion of the bone crest without bone loss, and since the rotation of the expanders-compactors is performed only manually, and without using motorised tools, their use guarantees the best possible sensitivity on the part of the operator, i.e. the dentist or operator in the dentist's stead, and consequently a lower probability of error.

The methods with expanders-compactors involve the use of only one burr, the pilot burr, which is adapted to generate a first hole of minimal size for the manual screwing of a first expander-compactor, the removal of which will be followed by the subsequent screwing-in of a second expander-compactor of slightly larger diameter, and optional subsequent screwing-unscrewing steps, all manual, of another two or three expanders-compactors of increasing diameter, until a site has been determined which is sufficient for the insertion of an implant of the preset dimensions.

The methods with expanders-compactors are particularly adapted to delicate situations such as the presence of thin bone crests, or the presence of spongy bone, which needs to be compacted in order to increase the primary stability of the implant, or in handling interventions at the maxillary sinuses, where sinking a burr can be extremely dangerous and it is therefore preferable to have a slower penetration governed directly by the hand of the operator, as is the case with the screwing-in of an expander-compactor.

Precisely because of the peculiar characteristics of manual handling, the methods of creating implantation sites with expanders-compactors can be executed without achieving the utmost possible precision, since both the initial drilling and the subsequent screwing-in operations of the different expanders-compactors are carried out at points and in directions that are determined by the surgeon according to his or her own experience, ability and sensitivity, which however might not guarantee the best result that could be hoped for.

The aim of the present invention is to provide an apparatus for providing implantation sites to be provided in dental surgery which is capable of overcoming the above mentioned drawbacks in the known art.

Within this aim, an object of the invention is to provide an apparatus that enables interventions of exceptionally high precision in the use of expanders-compactors.

Another object of the invention is to provide an apparatus that makes it possible to operate with expanders-compactors also on thin bone crests with the maximum necessary precision.

Another object of the invention is to provide a method to be performed with this apparatus.

Another object of the invention is to provide an apparatus and method that can also be used for the installation of implants at the maxillary sinuses.

Another object of the invention is to provide an apparatus for providing implantation sites to be provided in dental surgery which can be implemented using known systems and technologies.

This aim, and these and other objects which will become better apparent hereinafter, are achieved by an apparatus for providing implantation sites for dental surgery, characterized in that it comprises
- a reference template, which incorporates one or more first cylindrical surgical stents having a first, larger diameter,
- a series of additional surgical stents, each having a different diameter which decreases with respect to the diameter of the first stent, the additional stents being contoured so that they are insertable reversibly and in order one inside the other,
- a series of pilot burrs, each of which has a diameter that is compatible with a corresponding one of the surgical stents,
- a series of expanders-compactors and of osteotomes, each of which has a diameter that is compatible with a corresponding one of the surgical stents,
- a predefined intra-bone implant.

Further characteristics and advantages of the invention will become better apparent from the description of a preferred, but not exclusive, embodiment of the apparatus and of the method to be performed with the apparatus, according to the invention, the apparatus and method being illustrated by way of non-limiting example in the accompanying drawings wherein:
Figure 1 is a perspective view of part of the elements that make up the apparatus according to the invention;
Figure 2 is a schematic view, sectional along a sagittal line, of a first operational step of the method according to the invention;
Figure 3 is a schematic view, sectional along a sagittal line, of a second operational step of the method according to the invention;
Figure 4 is a schematic view, sectional along a sagittal line, of a third operational step of the method according to the invention;
Figure 5 is a schematic view, sectional along a sagittal line, of a fourth operational step of the method according to the invention.

With reference to the figures, an apparatus for providing implantation sites for dental surgery according to the invention is generally designated with the reference numeral 10.

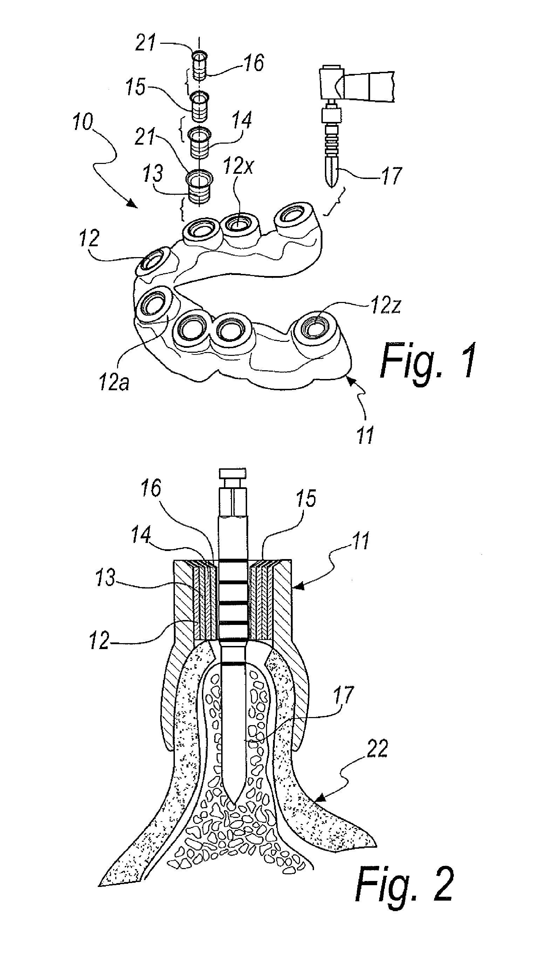

Such apparatus comprises:
- a reference template 11, which incorporates one or more first cylindrical surgical stents 12, 12a, 12x and 12z, having a first diameter;
- a series of additional surgical stents, for example four stents 13, 14, 15 and 16, each having a different diameter which decreases with respect to the diameter of the first stent 12, 12a and following; the second 13, third 14, fourth 15 and fifth 16 stents are contoured so that they are insertable reversibly and in order one inside the other;
- a series of pilot burrs, of which a first pilot burr 17 is exemplified in Figure 1 and in Figure 2; in the example described here the first burr 17 has a diameter that is compatible with the inner diameter of the fifth stent 16, and the apparatus is intended to include other pilot burrs, not shown for the sake of simplicity, with a cross-section that is such as to axially cross, with minimal play, respectively the third stent 14 and the fourth stent 15; the diametric compatibility between burr and stent thus refers to the fact that the stent has an inner diameter that is such as to guide the movement in the axial direction of the burr without braking it or obstructing it in any way, since each one of the pilot burrs has a diameter that is compatible with a corresponding one of the surgical stents;

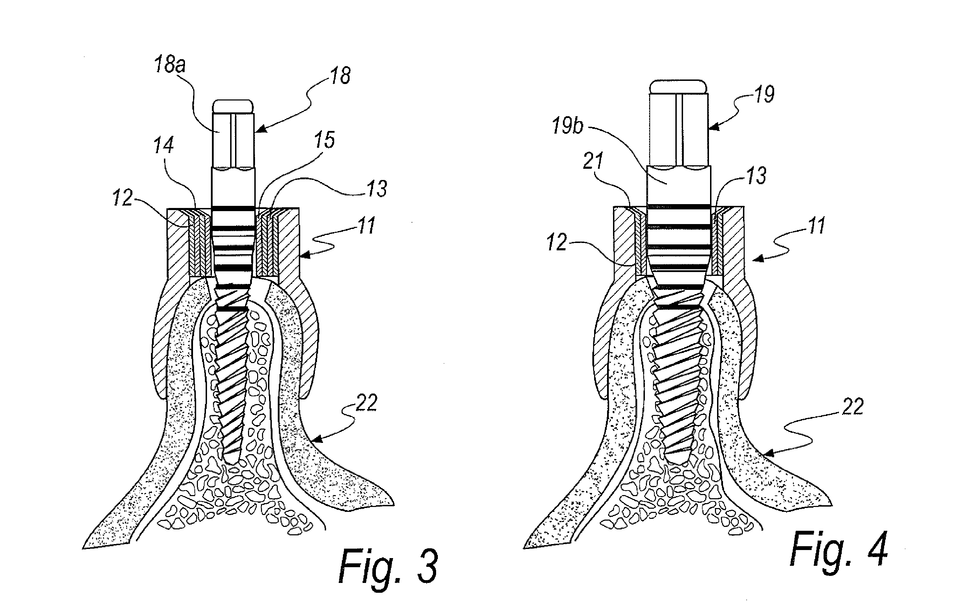

- a series of expanders-compactors, of which Figures 3 and 4 show for the purposes of example a first expander-compactor 18 and a second expander-compactor 19, and of osteotomes, not shown for the sake of simplicity, each of which has a diameter that is compatible with a corresponding one of the surgical stents 12, 13, 14, 15 and 16,
- a predefined intra-bone implant 20.

The reference template 11 with the first stents 12 and following stents is, for example, of the type made from a computerised virtual three-dimensional model.

The fabrication of a template 11 with stents 12 is understood to be of a type that is known per se.

The additional second 13, third 14, fourth 15 and fifth 16 stents are each specially colored with a different color, which is different from the color of the first stents 12, 12a and following, so as to be able to associate intuitively and rapidly each stent with the expander-compactor to be used, the corresponding expander-compactor being provided with a head portion, for example 18a and 19a, of the same color as the stent designed to be its guide.

The apparatus according to the invention also comprises a series of standard and screw-action osteotomes, also having different dimensions and increasing diameters, that are associable with a corresponding stent 12, 13, 14, 15, or 16.

The stents all have an abutment collar 21, which allows the stent to position itself correctly in an axial direction with respect to the stent in which it is inserted coaxially.

A method to be performed with the apparatus 10 according to the invention is the following, and is schematized in Figures 2 to 5.

Stabilizing the template 11 on the gingival arch 22 that is to be operated on.

Inserting concentrically in a first stent 12 the stents that are necessary to define a guide for a pilot burr 17 having a preset diameter, for a first step for removal of bone material.

For example in Figure 2, inserted in the first stent 12 are the second 13, third 14, fourth 15 and fifth 16 stents, the last of these being adapted to guide the movement in the axial direction of the burr 17.

Figure 3 shows a second step of the method according to the invention, in which a stent is removed, i.e. the stent that guides the burr, i.e. the fifth stent 16, and in the fourth stent 15 a first expander-compactor 18 is inserted, screwed manually or with the aid of a ratchet wrench or other tool.

The same operation is performed with other expanders-compactors of larger diameter, guided by the corresponding stents.
Figure 4 shows an example of the step of applying a last expander-compactor 19, guided by the second stent 13.

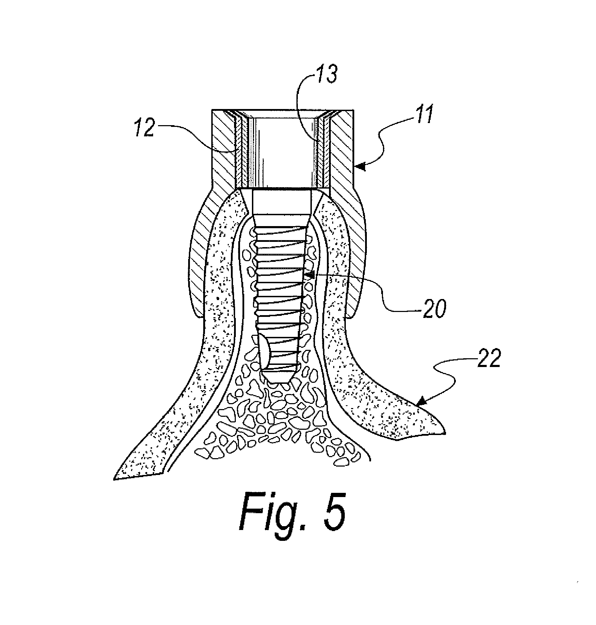

Figure 5 shows how the last stent adopted is also used for the installation of the implant 20.

A similar method can be implemented for the installation of an osteotome, both standard and threaded and screwable.

In practice it has been found that the invention fully achieves the intended aim and objects.

In particular, with the invention an apparatus has been developed for providing implantation sites to be provided in dental surgery, which combines the advantages of the geometric precision of an intervention with a reference template with stents, typical of methods for successive drillings with removal of bone material, and the advantages of precision and delicateness in creating the site, typical of methods with limited removal of bone material and the use of expanders-compactors.

Furthermore, with the invention an apparatus is provided that thus enables interventions of exceptionally high precision with the substantially manual use of expanders-compactors.

Furthermore, with the invention an apparatus is provided which makes it possible to operate with precision with expanders-compactors also on thin bone crests.

In addition, with the invention a method to be performed with this apparatus is provided.

With the invention an apparatus and method are provided which can also be used for the installation of implants at delicate regions like the maxillary sinuses.

Also, with the invention an apparatus for providing implantation sites to be provided in dental surgery is provided which can be implemented using known systems and technologies.

The invention, thus conceived, is susceptible of numerous modifications and variations, all of which are within the scope of the appended claims. Moreover, all the details may be substituted by other, technically equivalent elements.

In practice the materials employed, as well as the contingent dimensions and shapes, may be any according to requirements and to the state of the art.

The disclosures in Italian Patent Application No. PD2010A000119 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (10) for providing implantation sites for dental surgery, **characterized in that** it comprises
- a reference template (11), which incorporates one or more first cylindrical surgical stents (12, 12a, 12x, 12z) having a first diameter,
- a series of additional surgical stents (13, 14, 15, 16), each having a different diameter which decreases with respect to one of said first stents, said additional stents being contoured so that they are insertable reversibly in order one inside the other,
- a series of pilot burrs (17), each of which has a diameter that is compatible with a corresponding one of said surgical stents (12, 13, 14, 15, 16),
- a series of expanders-compactors (18, 19) and of osteotomes, each of which has a diameter that is compatible with a corresponding one of said surgical stents (12, 13, 14, 15, 16),
- a predefined intra-bone implant (20).

2. The apparatus according to claim 1, **characterized in that** said reference template (11) with the first stents (12, 12a, 12x, 12z) is of the type made of plastic material from a virtual three-dimensional model generated by means of a computer.

3. The apparatus according to claim 1, **characterized in that** said additional stents (13, 14, 15, 16) are each colored with a different color, which is different from the color of the first stents (12, 12a, 12x, 12z), so as to be able to associate intuitively and rapidly each stent with an expander-compactor which has a head portion (18a, 19a) of the same color as the stent designed to be its guide.

4. The apparatus according to claim 1, **characterized in that** it comprises a series of standard and screw-action osteotomes, having different dimensions and increasing diameters that are associable with a corresponding stent (12, 13, 14, 15, 16).

5. The apparatus according to the preceding claims, **characterized in that** said stents are each provided with an abutment collar (21), which allows each stent to position itself correctly in an axial direction with respect to the stent in which it is inserted coaxially.

6. A method to be performed with an apparatus (10) according to one or more of the preceding claims, comprising the steps of:
- stabilizing the template (11) on the gingival arch (22) that is to be operated on,
- inserting concentrically in a first stent (12) the stents (13, 14, 15, 16) that are necessary to define a guide for a pilot burr (17) having a preset diameter for a first step for removal of bone material,
- removing the stent (16) for guiding the burr (17) and inserting in the underlying stent (15) a first expander-compactor (18), which is screwed manually or with the aid of a ratchet wrench or other tool,
- repeating the preceding operation with additional expanders-compactors (19) having a larger diameter than the first expander-compactor (18), until the preset dimensions of the implantation site have been reached in order to install a preset implant (20),
- installing the implant (20).
